# EUROPEAN PATENT SPECIFICATION

(11) **EP 4 704 382 B1**
(45) Date of publication and mention of the grant of the patent: **24.06.2026**
(21) Application number: 24306408.6
(22) Date of filing: 28.08.2024
(51) Int. Cl.: H04L 9/40, H04L 43/0876, H04L 43/026, H04L 41/082, H04L 43/16, H04L 41/0806, H04L 41/142, H04L 43/022

(54) **SYSTEM AND METHOD FOR DETECTION OF VOLUMETRIC MALICIOUS ATTACKS ON DATACENTER NETWORKS**
SYSTEM UND VERFAHREN ZUR ERKENNUNG VON VOLUMETRISCHEN BÖSARTIGEN ANGRIFFEN AUF DATENCENTERNETZWERKE
SYSTÈME ET PROCÉDÉ DE DÉTECTION D'ATTAQUES MALVEILLANTES VOLUMÉTRIQUES SUR DES RÉSEAUX DE CENTRE DE DONNÉES

(43) Date of publication of application: 04.03.2026
(73) Proprietor: OVH, 59100 Roubaix (FR)
(72) Inventor: BOIN, Clément, 59000 Lille (FR); BACARA, Christophe, 59270 Wasquehal (FR); LOPEZ, Benjamin, 59510 Hem (FR); GUILLAUME, Xavier, 59512 Roubaix (FR); RAVAIL, Charlelie, 69008 Lyon (FR)
(74) Representative: BCF Global

(56) References cited:
- CN-A- 111 641 628
- ANDRÃ PROTO ET AL: "Statistical Model Applied to NetFlow for Network Intrusion Detection", 1 October 2010, TRANSACTIONS ON COMPUTATIONAL SCIENCE XI, SPRINGER BERLIN HEIDELBERG, BERLIN, HEIDELBERG, PAGE(S) 179 - 191, ISBN: 978-3-642-17696-8, XP019159241
- ASHOK KUMAR A R ET AL: "Simple, efficient location-based routing for data center network using IP address hierarchy", INTERNATIONAL JOURNAL OF NETWORK MANAGEMENT, WILEY, GB, vol. 26, no. 6, 24 August 2016 (2016-08-24), pages 492 - 514, XP071966881, ISSN: 1055-7148, DOI: 10.1002/NEM.1946

## Description

### TECHNICAL FIELD

The present disclosure generally relates to network traffic engineering analytics of datacenter networks, and in particular, to the detection of volumetric malicious threats on datacenter networks.

### BACKGROUND

In servicing client demands, datacenter networks must be configured with the necessary resources to adequately process massive amounts of network traffic data on almost a real-time basis. At the same time, datacenters must also monitor the flow status of network traffic to detect any issues with the security and/or performance of the network or related network elements.

The detection of potential malicious threats are typically directed to distributed denial of service (DDoS) attacks that target a specific host/server with a bombardment of malicious packet data. However, recently, there appears to be a different mode of DDoS attacks that, instead of bombarding a specific host/server, the attacks are directed to transmitting limited quantities of malicious packet data to a multiple servers belonging to a subnet of a datacenter network which functions to eventually saturate the corresponding switch/router. This malicious attack mode has been referred to as volumetric or "carpet bombing," which is difficult to detect by conventional network analytical techniques.

For example, Chinese Pat. App. No. CN 111,641,628 discloses a method for recognizing DDoS flood attacks by utilizing received source information to analyze source IP information to determine potential deceptive DDoS threats.

Additionally, ANDRA PROTO ET AL: "Statistical Model Applied to NetFlow for Network Intrusion Detection", 1 October 2010 (2010-10-01), TRANSACTIONS ON COMPUTATIONAL SCIENCE XI, SPRINGER BERLIN HEIDELBERG, BERLIN, HEIDELBERG, PAGE(S) 179-191, XP019159241, ISBN: 978-3-642-17696-8 discloses a methodology for detecting DDoS attacks on large-scale networks by identifying traffic anomalies using the NetFlow protocol and statistical techniques. The identification of traffic anomalies includes collecting and storing NetFlow data, modeling the network traffic pattern based on the data, and employing statistical sampling techniques to detect and remove statistically outlying data.

However, there still remains an interest in providing a more efficient monitoring process capable of accurately detecting malicious threats, such as DDoS carpet bombing attacks.

### SUMMARY

The embodiments of the present disclosure have been designed based on the developers' appreciation of the drawbacks and issues associated with current network information flows difficulties in detecting volumetric malicious carpet bombing attacks.

As such, the embodiments of the present technology are defined by the appended set of claims.

### BRIEF DESCRIPTION OF THE FIGURES

Further features and advantages of the present disclosure will become apparent from the following detailed description taken in combination with the appended drawings, in which:
FIG. 1 depicts a high-level conceptual diagram of a network topology, in accordance with the embodiments of the present disclosure;
FIGs. 2A, 2B, 2C depict aspects of a functional flow of an aggregation processing architecture for detecting malicious threats, in accordance with the embodiments of the present disclosure;
FIG. 3 depicts a method flowchart for detecting malicious threats based on the aggregation process of FIGs. 2A-2C, in accordance with the embodiments of the present disclosure;
FIG. 4 depicts a method flowchart for future aggregations to detect malicious threats, in accordance with the embodiments of the present disclosure; and
FIG. 5 depicts a depicts an exemplary computing environment for implementing and/or executing any of the methods described herein, in accordance with the embodiments of the present disclosure.

It is to be understood that throughout the appended drawings and corresponding descriptions, like features are identified by like reference characters and that the drawings are not to scale. It should also be understood that the drawings and ensuing descriptions are intended for illustrative purposes only and that such disclosures are not intended to limit the scope of the claims.

### DETAILED DESCRIPTION

The present disclosure is directed to addressing at least some of the drawbacks and issues associated with current network information flows difficulties in detecting malicious volumetric/carpet bombing threats or attacks.

It will be understood, however, that the examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity. In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology.

Moreover, where no examples of modifications have been set forth, it should not be interpreted that no modifications are possible and/or that what is described is the sole manner of implementing that element of the present technology.

It will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

Similarly, functions of the various elements shown in the figures, including any functional block labeled as a "processor", may be provided through the use of dedicated hardware as well as hardware capable of executing software in association with appropriate software.

Additionally, to the extent that the phrase "at least one of A and B" is used in the description and claims, it will be understood that this phrase is intended to mean "A only", "B only" or both "A and B".

With these fundamentals in place, presented heretofore are non-limiting embodiments that illustrate various aspects and implementations of the present disclosure.

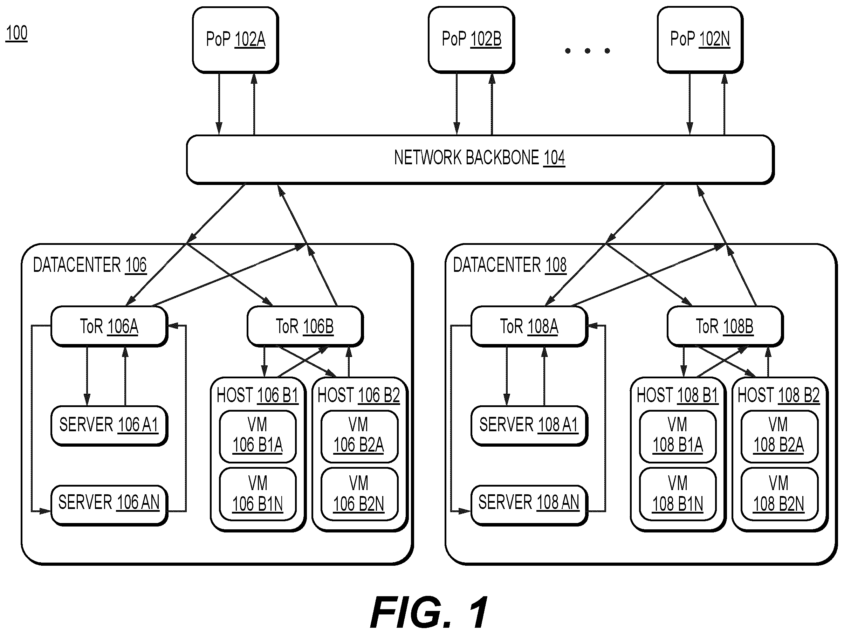

FIG. 1 depicts a high-level conceptual diagram of a network topology **100,** in accordance with the embodiments of the present disclosure. As shown, network topology **100** comprises point-of-presence (PoP) network devices **102A-N** that provide packet data traffic to a network communications infrastructure **104.** The network communications infrastructure **104** then directs the packet data traffic to corresponding datacenters based on the IP destination addresses of the packet data.

By way of a nonlimiting illustration, the network communications infrastructure **104** is shown to direct the packet data traffic to datacenters **106, 108.** Again, for purposes of clarity, datacenters **106, 108** are shown to include top-of-rack (ToR) network switching/routing devices **106A, 108A,** respectively. The ToR routing devices **106A, 108A** are configured to provide packet data routing services to designated IP subnet destination ranges. The packet data is then routed to dedicated network servers **106A1-106AN, 108A1-108AN,** respectively, that have destination IP addresses that fall within the designated IP subnet destination ranges. In certain embodiments, the designated IP subnet range may include up to 256 network servers, respectively, under the routing control of the ToR routing devices **106A, 108A.**

Additionally, datacenters **106, 108** are also shown to include top-of-rack (ToR) routing devices **106B, 108B,** respectively, that route packet data to host network devices **106B1, 106B2, 108B1, 108B2.** These host network devices **106B1, 106B2, 108B1, 108B2** operate to route packet data to corresponding virtual machines (VM) **106B1A-B1N, 106B2A-B2N** and **108B1A-B1N, 108B2A-B2N,** based on the designated destination IP addresses. In certain embodiments, the designated IP addresses may include up to 256 VMs, respectively, under the routing control of the ToR routing devices **106B, 108B.**

Moreover, network topology **100** utilizes network flow information processes that observe traffic-related metadata, such as, for example, source/destination IP addresses, port source/destination, number of packets, total size of payload, transmission/reception times, *etc.* for traffic flowing across network devices, such as, for example, switches, routers, hosts, *etc.* The network flow information may operate under the *netflow* standard, *sflow* standard, or any suitable network flow-oriented standard capable of communicating network flow information of network devices throughout the network.

Armed with such network flow information, network topology **100** is able to compute expected bandwidth for specific or ranges of IP addresses for network devices as well as establishing and defining thresholds regarding total received packet data size and total number of received packets based on clients' network capacities and categories (*i.e.,* gaming, internal services, storage, *etc*.)*.*

As noted above, "carpet bombing" attacks are directed to transmitting limited quantities of malicious packet data to a datacenter network switch/router that services multiple servers having different individual destination IP addresses under a corresponding IP subnet. Because of the limited amount of malicious packet data that distributed among multiple servers, carpet bombing is difficult to detect by conventional analytical techniques.

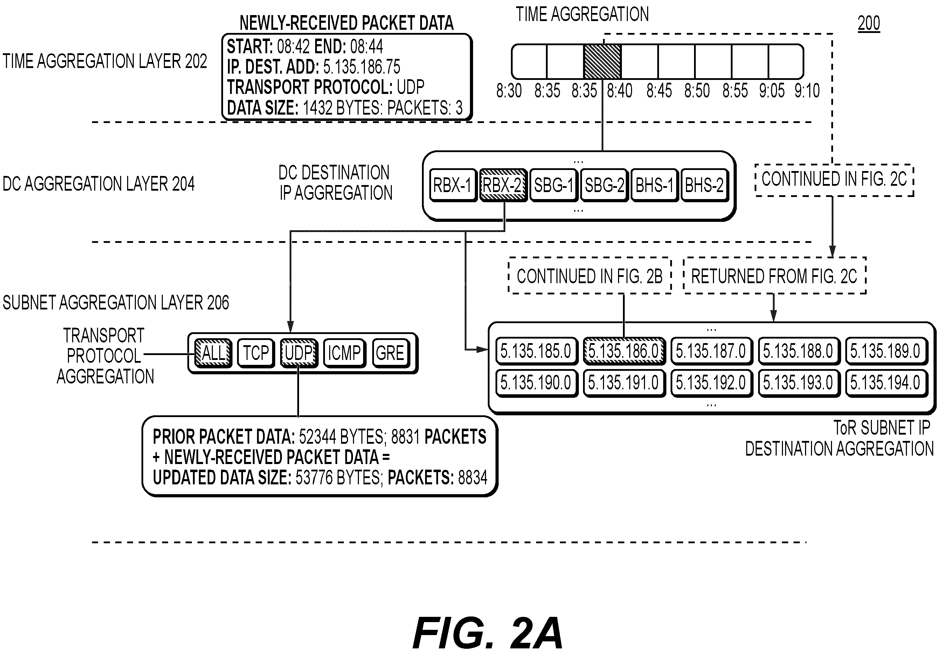

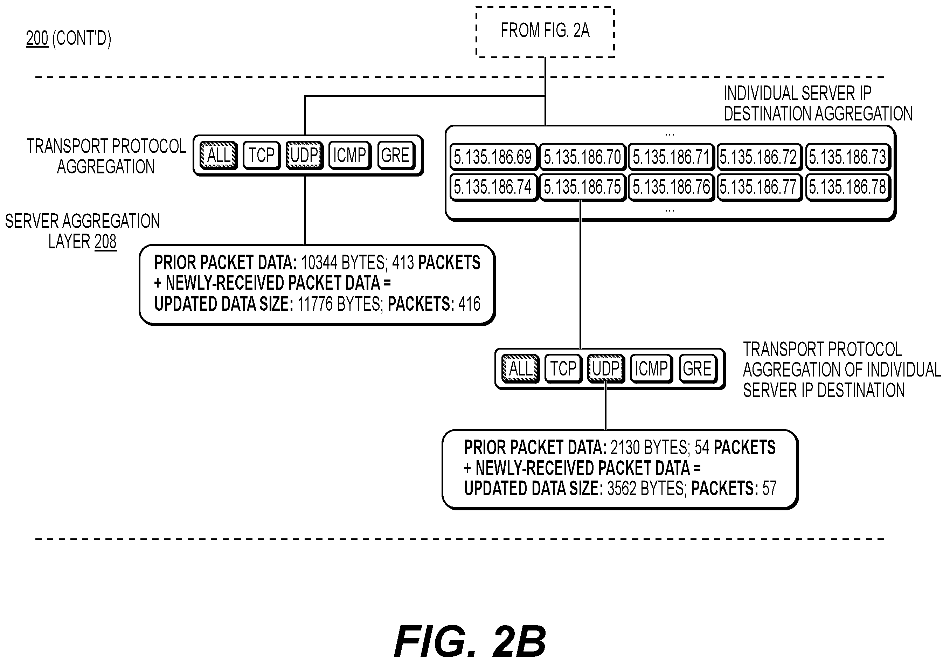

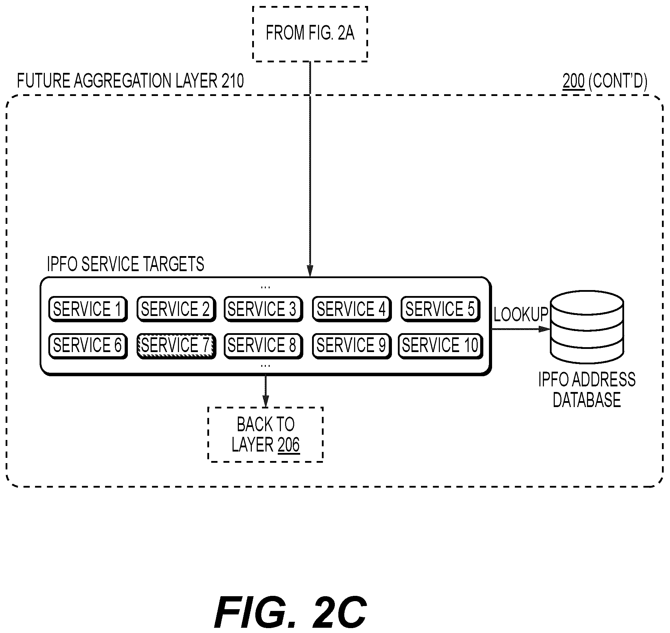

Accordingly, FIGs. 2A, 2B, 2C depict aspects of a functional flow of aggregation processing architecture **200** for detecting malicious threats, including DDoS carpet bombing attacks, in accordance with the embodiments of the present disclosure. As shown, aggregation processing architecture **200** is a multi-layered aggregation detection architecture configured to aggregate all potential packet data threats that are distributed among multiple servers pertaining to an IP subnet to detect DDoS carpet bombing attacks directed to incapacitating network routing devices **106A, 108A** in control of multiple servers.

As depicted, aggregation processing architecture **200** comprises a time aggregation layer **202,** a datacenter (DC) aggregation layer **204,** a subnet aggregation layer **206,** a server aggregation layer **208,** and a future aggregation layer **210.** As will be described in greater detail below, aggregation processing architecture **200** utilizes network flow information to analyze and process newly-received packet data that is iteratively accumulated to determine whether the network flow information indicates metrics exceeding established thresholds for the aggregation layers **202, 204, 206,** and **208.**

In particular, as shown in FIG. 2A, new packet data is received having network flow information in which processing architecture **200** determines, based on the network flow information, the received start and end times, IP destination address, defined transport protocol, overall payload packet data size, and number of discrete packets for the received packet data. The selection of the new packet data to be received is generally based on netflow information processes, such as a netflow traffic-based sampling or statistical algorithm. In the nonlimiting illustrated example, the newly-received packet data has been determined to comprise 3 discrete packets having a packet data size of 1432 bytes.

The time aggregation layer **202** of processing architecture **200** assigns a corresponding predefined time interval window based on the received start and end times of the newly-received packet data. The time aggregation layer **202** is configured to aggregate traffic data for a variety of different time window resolutions, such, for example, 100ms, 1,000ms, 10,000ms, *etc.* In the nonlimiting illustrated example, the network flow information of the newly-received data packet has a start and end time between 8:42 and 8:44, in which the time aggregation layer **202** assigns it to a corresponding predefined time interval window of 8:40 to 8:45.

Upon assigning the newly-received packet data to the corresponding time interval window, aggregation processing architecture **200** then analyzes the received packet data under the datacenter (DC) aggregation layer **204.** The DC aggregation layer **204** is configured to identify which datacenter the newly-received packet data is directed to, based on the IP destination address, as discerned from the related network flow information. In the nonlimiting illustrated example, the newly-received packet data has a destination IP address of 5.135.186.75 which is identified as belonging to datacenter RBX-2.

After identifying the corresponding datacenter, aggregation processing architecture **200** then analyzes the newly-received data packet under the subnet aggregation layer **206.** The subnet aggregation layer **206** is configured to determine the corresponding IP subnet destination ranges and the corresponding ToR routing device, as discerned from the related network flow information. The subnet aggregation layer **206** also performs transport protocol aggregation for the determined IP subnet destination ranges. In the nonlimiting illustrated example, based on the destination IP address of 5.135.186.75, the newly-received packet data is determined to belong to the IP destination subnet 5.135.186.0. Relatedly, the transport protocol aggregation determines that the corresponding protocol is UDP in which the packet data transported by UDP, prior to the newly-received packet data, comprised 8831 packets having a total data size of 52344 and, after receipt of the new packet data (e.g., 3 packets having a total size of 1432 bytes), the resulting updated packet metrics are 8834 packets having a total size of 53776 bytes.

At this subnet aggregation layer **206,** if it is determined that the updated number of received packets and/or updated total packet data size exceeds a pre-defined threshold for the corresponding destination subnet 5.135.186.0, processing architecture **200** sends an alert indicating a potential threat/attack has been detected. The subnet aggregation layer **206** is configured to iteratively continue to update the number of packets and packet data size accumulated thus far and determine any threshold breaches for future received packet data provided by the same transport protocol (e.g., UDP) for the same corresponding destination subnet (e.g., 5.135.186.0).

Turning to FIG. 2B, after assessing and aggregating the subnet destination IP, the aggregation processing architecture **200** moves onto the server aggregation layer **208** to analyze the metrics for the corresponding subnet transport protocol, beginning with the destination IP address of 5.135.186.75 for the individual server, as discerned from the related network flow information as well as analyzing the metrics for the transport protocol of the specific individual server having the destination IP address of 5.135.186.75.

In the non-limiting illustrated example, the server aggregation layer **208** aggregates the subnet transport protocol to determine that the corresponding UDP protocol has transported packet data comprising 413 packets having a total data size of 10344 bytes, prior to the newly-received packet data. After receipt of the new packet data (e.g., 3 packets having a total size of 1432 bytes), the resulting updated packet metrics are 416 packets having a total size of 11776 bytes. Then layer **208** aggregates the individual server transport protocol to determine that the corresponding UDP protocol has transported packet data comprising 54 packets having a total data size of 2130 bytes, prior to the newly-received packet data. And, after receipt of the new packet data, the resulting updated packet metrics are 57 packets having a total size of 3562 bytes.

At this server aggregation layer **208,** if it is determined that the number of received packets and/or received total packet data size exceed a defined threshold, processing architecture **200** sends an alert indicating a potential threat/attack has been detected.

Turning over to FIG. 2C, processing architecture **200** also has the capability of providing future aggregating operations and protection of additional/alternative IP addresses in case of IP failovers (IPFO). In particular, future aggregation layer **210** allows clients to request and acquire additional destination IP addresses that are not related to client's prior registered IP subnet addresses and that operate as failover addresses that can seamlessly switch between servers. The future aggregation layer **210** employs an IPFO database containing all IPFO and corresponding clients. As such, future aggregation layer **210** performs accesses the IPFO database and performs a "lookup" function to identify what prior registered subnet IP addresses belong to the requesting client. Upon identifying the client's prior registered subnet IP addresses, the additional IP addresses are associated and registered with the client as well as the prior registered subnet IP addresses. The future aggregation layer **210** then returns back to the subnet aggregation layer **206**of processing architecture **200** for continued aggregation processing of the layers. Therefore, if an attack on a server is detected, all IP addresses corresponding to the specific client will be addressed.

In this manner, aggregation processing architecture **200** utilizes network flow information to analyze and process newly-received packet data that is iteratively accumulated for each layer to detect smaller quantities of malicious packet data that are spread across multiple servers to eventually saturate networking equipment.

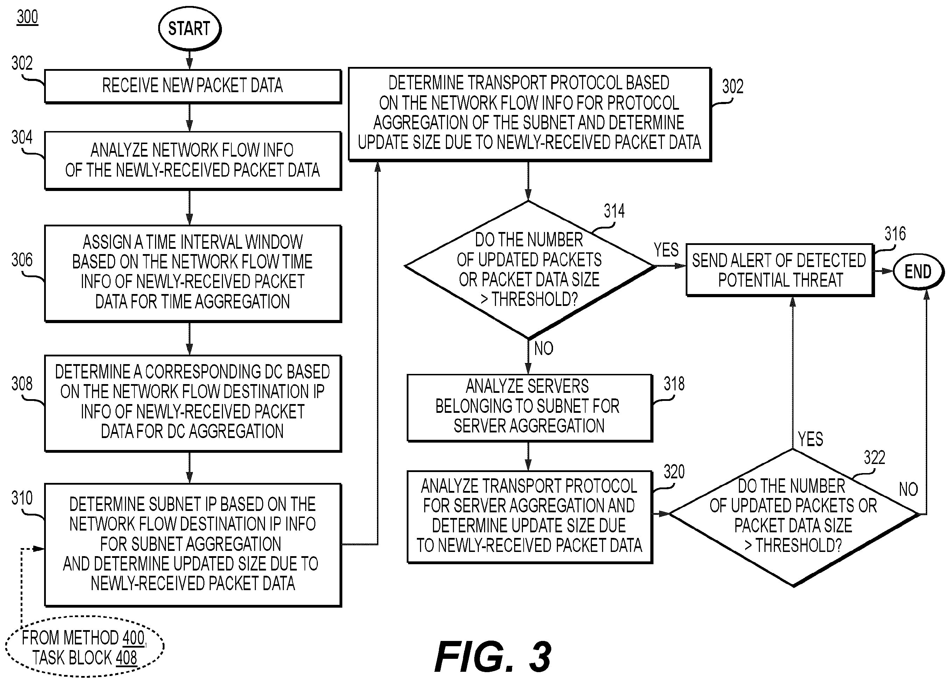

FIG. 3 depicts a flowchart of method **300** for detecting malicious threats based on the aggregation processing architecture **200,** in accordance with the embodiments of the present disclosure. As shown, method **300** commences at task block **302** in which new packet data is received by the network and, in task block **304,** the network flow information of the newly-received packet data is analyzed for traffic-related metadata. Such metadata includes source/destination IP addresses, port source/destination, number of packets, total size of payload, transmission/reception times, *etc.* for traffic flowing across network devices.

At task block **306,** a time interval window is assigned based on the network flow time for time aggregation. As noted above, time aggregation layer **202** is configured to aggregate packet data for a variety of different time window resolutions, such, for example, 100ms, 1,000ms, 10,000ms, *etc.* At task block **308,** a corresponding datacenter (DC) is determined based on the network flow destination IP info for DC aggregation.

At task block **310,** the corresponding subnet IP range is determined based on the network flow destination IP info for subnet aggregation. The subnet IP range is related to the ToR device that may contain up to 256 individual servers. The subnet aggregation updates the number of packets and size based on the newly-received packet data. At task block **312,** the transport protocol is determined based on the network flow info for protocol aggregation of the subnet as well as determine the updated number of packets and size based on the newly-received packet data.

At decision block **314,** method **300** determines whether the updated number of packets or the total packet data size of the protocol aggregation is greater than a threshold value for the subnet. If so, an alert is sent at task block **316** indicating the detection of a potential threat/attack. If not, method **300** progresses to task block **318** where the servers belonging to the subnet are analyzed for server aggregation.

Then, at task block **320** the transport protocol related to the subnet is analyzed to determine the updated number of packets and the total packet data size of the transport protocol aggregation.

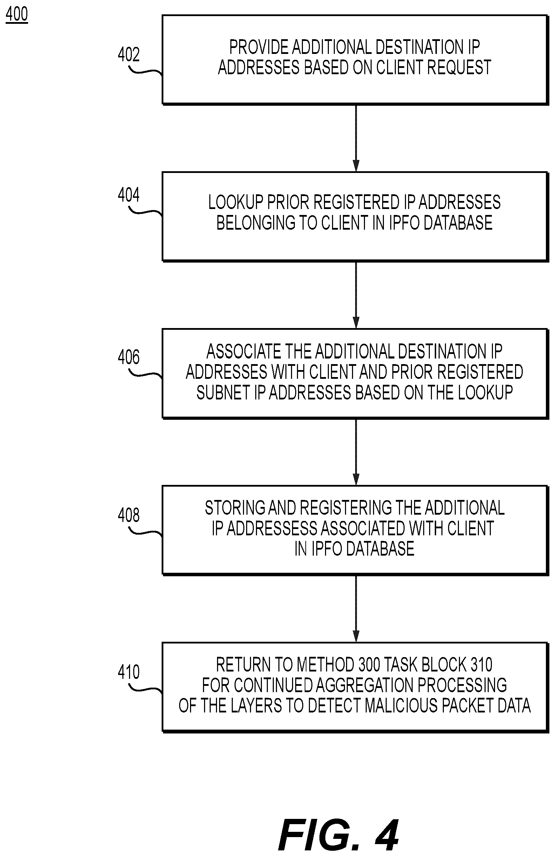

At decision block **322,** method **300** determines whether the updated number of packets and the total packet data size of the transport protocol aggregation is greater than a threshold value for the servers and, if so, an alert is sent indicating the detection of a potential threat/attack via task block **316,** and method **300** terminates. If it is determined that the packet number or size does not exceed the threshold then method **300** returns back to task block **302** to continue the iteration of aggregating newly-received packet data size and numbers for each of the layers.FIG. 4 depicts a flowchart for a method **400** to service future aggregation processes to detect malicious threats for clients requesting additional destination IP addresses, in accordance with the embodiments of the present disclosure. As shown, method **400** commences at task block **402** wherein method **400** provides additional destination IP addresses based on client requests. At task block **404,** method **400** performs a lookup function of IPFO database of prior registered IP addresses belonging to requesting client.

At task block **406,** based on the lookup function, method **400** associates and registers the additional destination IP addresses with the requesting client in the IPFO database. Then, task block **408,** method **400** returns back to method **300** at task block **310** for the subsequent processing of layers to detect malicious packet data.

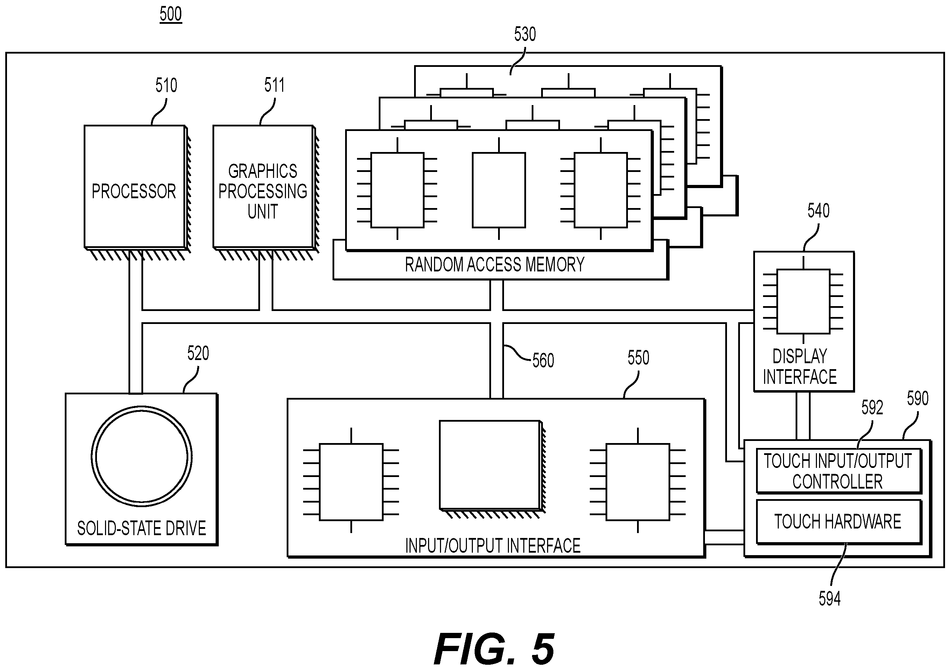

FIG. 5 depicts an exemplary computing environment **500,** which may be used to implement and/or execute any of the methods described herein, in accordance with various embodiments of the present disclosure. In some embodiments, the computing environment **500** may be implemented by any of a conventional personal computer, a network device, and/or an electronic device (such as, but not limited to, a mobile device, a tablet device, a server, a controller unit, a control device, etc.), and/or any combination thereof appropriate to the relevant task at hand.

In some embodiments, the computing environment **500** comprises various hardware components including one or more single or multi-core processors collectively represented by processor **510,** a solid-state drive **520,** a random access memory **530,** and an input/output interface **550.** The computing environment 500 may be a computer specifically designed to operate a machine learning algorithm (MLA). The computing environment **500** may be a generic computer system.

In some embodiments, the computing environment **500** may also be a subsystem of one of the above-listed systems. In some other embodiments, the computing environment **500** may be an "off-the-shelf" generic computer system. In some embodiments, the computing environment **500** may also be distributed amongst multiple systems. The computing environment **500** may also be specifically dedicated to the implementation of the present technology. As a person in the art of the present technology may appreciate, multiple variations as to how the computing environment **500** is implemented may be envisioned without departing from the scope of the present technology.

Those skilled in the art will appreciate that processor **510** is generally representative of a processing capability. In some embodiments, in place of or in addition to one or more conventional Central Processing Units (CPUs), one or more specialized processing cores may be provided. For example, one or more Graphic Processing Units **511** (GPUs), Quantum Processing Units (QPUs), Tensor Processing Units (TPUs), and/or other so-called accelerated processors (or processing accelerators) may be provided in addition to or in place of one or more CPUs.

System memory will typically include random access memory **530,** but is more generally intended to encompass any type of non-transitory system memory such as static random access memory (SRAM), dynamic random access memory (DRAM), synchronous DRAM (SDRAM), read-only memory (ROM), or a combination thereof. Solid-state drive **520** is shown as an example of a mass storage device, but more generally such mass storage may comprise any type of non-transitory storage device configured to store data, programs, and other information, and to make the data, programs, and other information accessible via a system bus **560.** For example, mass storage may comprise one or more of a solid state drive, hard disk drive, a magnetic disk drive, and/or an optical disk drive.

Communication between the various components of the computing environment **500** may be enabled by a system bus **560** comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface **550** may enable networking capabilities such as wired or wireless network communications. As an example, the input/output interface **550** may comprise a networking interface such as, but not limited to, a network port, a network socket, a network interface controller and the like. Multiple examples of how the networking interface may be implemented will become apparent to the person skilled in the art of the present technology. For example, the networking interface may implement specific physical layer and data link layer standards such as Ethernet, Fibre Channel, Wi-Fi, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface **550** may be coupled to a touchscreen **590** and/or to the one or more internal and/or external buses **560.** The touchscreen **590** may be part of the display. In some embodiments, the touchscreen **590** is the display. The touchscreen **590** may equally be referred to as a screen **590.** In the embodiments illustrated in FIG. 1, the touchscreen **590** comprises touch hardware **594** (e.g., pressure-sensitive cells embedded in a layer of a display allowing detection of a physical interaction between a user and the display) and a touch input/output controller **592** allowing communication with the display interface **540** and/or the one or more internal and/or external buses **560.** In some embodiments, the input/output interface **550** may be connected to a keyboard (not shown), a mouse (not shown) or a trackpad (not shown) allowing the user to interact with the computing environment 500 in addition to or instead of the touchscreen **590.**

According to some implementations of the present technology, the solid-state drive **520** stores program instructions suitable for being loaded into the random access memory **530** and executed by the processor **510** for executing acts of one or more methods described herein. For example, at least some of the program instructions may be part of a library or an application.

The computing environment **500** may include any number of the illustrated components, which may be integrated in any number of physical devices. The computing environment **500** may be implemented as a cloud environment and/or a distributed architecture. The computing environment **500** may include multiple servers, which may be in different physical locations and/or on different networks. The computing environment **500** may include virtualized systems. The methods described herein, or any parts of the methods described herein, may be executed on multiple systems as distributed applications.

With this said, it should be understood that, although the embodiments presented herein have been described with reference to specific features and structures, various modifications and combinations may be made without departing from the underlying concepts and principles taught by these disclosures. As such, the specification and drawings are to be regarded as providing edifying guidance as to the underlying concepts and principles presented by the implementations and embodiments.

Accordingly, the scope encompassed by the underlying concepts and principles presented by the disclosed implementations and embodiments is defined by the appended claims.

## Claims

1. A method (300) for detecting malicious threats by iteratively aggregating network flow information of received packet data, comprising:
analyzing (304) the network flow information of the received packet data containing information identifying start and end times, destination IP address, transport protocol, total packet data size, and number of packets of the received packet data;
assigning a time interval window (306), based on the start and end times identified by the network flow information of the received packet data, for time aggregation;
determining a corresponding datacenter (DC) (308), based on the destination IP address identified by the network flow destination information of the received packet data, for DC aggregation;
determining a range of a destination IP subnet (310), corresponding to the destination IP address identified by the network flow destination information of the received packet data, for subnet aggregation;
evaluating the transport protocol (312) for the destination IP subnet and updating the total packet data size and/or number of packets as identified by the network flow destination information of the received packet data;
determining whether the updated packet data size and/or number of packets of the transport protocol (312) for the destination IP subnet exceeds a first predefined threshold value (314);
evaluating a transport protocol (320) for server(s) 'corresponding to the destination IP subnet and updating the packet data size and/or number of packets as identified by the network flow destination information of the received packet data; and
determining whether the updated packet data size and/or number of packets of the transport protocol (312) for the server(s) corresponding to the destination IP subnet exceeds a second predefined threshold (322);
wherein:
upon determining that the updated packet data size and/or number of packets of the transport protocol for the destination IP subnet exceeds the first predefined threshold value, issuing an alert indicating the detection of a potential threat (316), and
upon determining that the updated packet data size and/or number of packets of the transport protocol for the servers corresponding to the destination IP subnet exceeds the second predefined threshold value, issuing an alert indicating the detection of a potential threat.

2. The method (300) of claim 1, wherein the network flow information of the received packet data is used to establish the predefined first and second threshold values.

3. The method (300) of claim 1 or 2 wherein, upon determining that the updated packet data size and/or number of packets of the transport protocol (312) for the destination IP subnet do not exceed the first predefined threshold value (314), continue to evaluate the server transport protocol.

4. The method (300) of anyone of claims 1 to 3 wherein, upon determining that the updated packet data size and/or number of packets of the transport protocol (312) for the servers corresponding to the destination IP subnet do not exceed the second predefined threshold value (322), iteratively return back (302) to evaluate subsequently newly-received packet data.

5. The method (300, 400) of anyone of claims 1 to 4, further comprising provisioning additional destination IP addresses requested by a client by:
providing additional destination IP addresses (402) requested by client;
performing a lookup function of a database (404) to identify stored prior registered destination IP addresses belonging to the requesting client;
associating the additional destination IP addresses (406) into the database, based on the identified stored prior registered IP addresses; and
registering and storing the additional destination IP addresses (408) associated with the requesting client in the database.

6. The method (300, 400) of claim 5 wherein, after registering and storing the additional IP addresses for the requesting client (408), returning back (410) to the aggregation processing (310) of the method (300).

7. The method (300, 400) of claim 1, wherein selection of the packet data to be received is based, in part, on a netflow traffic-based statistical sampling process.

8. A system for detecting malicious threats by iteratively aggregating network flow information of received packet data, comprising:
a network communications infrastructure (104) configured to facilitate transport of the received packet data and to direct the received packet data to an intended destination, based on the corresponding network flow information of the received packet data, wherein the network flow information contains information identifying a destination IP address, start and end times, transport protocol, total packet data size, and number of packets of the received packet data;
at least one datacenter (DC) (106, 108), in communications with the network communications infrastructure (104), comprising at least one top-of-rack (ToR) network switching device (106A-B, 108A-B) configured to manage a plurality of servers (106A1-N, 106B1-B2, 108A1-N, 108B1-B2) associated with [[an]] a destination IP subnet corresponding to the destination IP address identified by the network flow information of the received packet data;
a time aggregation layer (202) configured to assign a time interval window for the received packet data based on the start and end times identified by the network flow information of the received packet data;
a DC aggregation layer (204) configured to determine a corresponding DC (106, 108), based on the destination IP address identified by the network flow information of the received packet data;
a subnet aggregation layer (206) configured to:
determine a range of the destination IP subnet and related destination subnet transport protocol based on the network flow information of the received packet data,
evaluate the destination subnet transport protocol and update the packet data size and/or number of packets based on the received packet data network flow information identified by the network flow information of the received packet data, and
determine whether the updated packet data size and/or number of packets of the destination subnet transport protocol exceeds a first predefined threshold value;
a server aggregation layer (208 ) configured to:
determine server(s) corresponding to the destination IP subnet and related server transport protocol based on the network flow information of the received packet data,
evaluate the server transport protocol and update the packet data size and/or number of packets based on the received packet data network flow information of the received packet data, and
determine whether the updated packet data size and/or number of packets of the destination server transport protocol exceeds a second predefined threshold value;
wherein:
upon determining that the subnet transport protocol updated packet data size and/or number of packets exceeds the first predefined threshold value, issuing an alert indicating a detection of a potential threat; and
upon determining that the server transport protocol updated packet data size and/or number of packets exceeds the second predefined threshold value, issuing an alert indicating the detection of a potential threat.

9. The system of claim 8, wherein the network flow information of the received packet data is used to establish the predefined first and second threshold values.

10. The system of claim 8 or 9, wherein the aggregation layer (210) is further configured to:
provide additional destination IP addresses requested by a client;
perform a lookup function of a database to identify prior stored registered destination IP addresses belonging to the requesting client;
associate the additional destination IP addresses with the requesting client, based on the identified stored prior registered IP addresses; and
register and store the additional destination IP addresses associated with the requesting client in the database.

11. The system of claim 8, wherein selection of the packet data to be received is based, in part, on a netflow traffic-based statistical sampling process.

## Patentansprüche

1. Verfahren (300) zum Erkennen bösartiger Bedrohungen durch iteratives Aggregieren von Netzwerkflussinformationen empfangener Paketdaten, umfassend:
Analysieren (304) der Netzwerkflussinformationen der empfangenen Paketdaten, die Informationen zum Identifizieren einer Start- und Endzeit, einer Ziel-IP-Adresse, eines Transportprotokolls, einer Gesamtpaketdatengröße und einer Anzahl von Paketen der empfangenen Paketdaten enthalten;
Zuweisen eines Zeitintervallfensters (306) basierend auf der Start- und Endzeit, die durch die Netzwerkflussinformationen der empfangenen Paketdaten identifiziert werden, für eine Zeitaggregation;
Bestimmen eines entsprechenden Datencenters (DC) (308) basierend auf der Ziel-IP-Adresse, die durch die Netzwerkflusszielinformationen der empfangenen Paketdaten identifiziert wird, für eine DC-Aggregation;
Bestimmen eines Bereichs eines Ziel-IP-Subnetzes (310), der der Ziel-IP-Adresse entspricht, die durch die Netzwerkflusszielinformationen der empfangenen Paketdaten identifiziert wird, für eine Subnetzaggregation;
Auswerten des Transportprotokolls (312) für das Ziel-IP-Subnetz und Aktualisieren der Gesamtpaketdatengröße und/oder der Anzahl von Paketen, die durch die Netzwerkflusszielinformationen der empfangenen Paketdaten identifiziert werden;
Bestimmen, ob die aktualisierte Paketdatengröße und/oder die Anzahl von Paketen des Transportprotokolls (312) für das Ziel-IP-Subnetz einen ersten vordefinierten Schwellenwert überschreiten (314);
Auswerten eines Transportprotokolls (320) für einen oder mehrere Server, die dem Ziel-IP-Subnetz entsprechen, und Aktualisieren der Paketdatengröße und/oder der Anzahl von Paketen, die durch die Netzwerkflusszielinformationen der empfangenen Paketdaten identifiziert werden; und
Bestimmen, ob die aktualisierte Paketdatengröße und/oder die Anzahl von Paketen des Transportprotokolls (312) für den einen oder die mehreren Server, die dem Ziel-IP-Subnetz entsprechen,
einen zweiten vordefinierten Schwellenwert überschreiten (322); wobei:
bei Bestimmen, dass die aktualisierte Paketdatengröße und/oder die Anzahl von Paketen des Transportprotokolls für das Ziel-IP-Subnetz den ersten vordefinierten Schwellenwert überschreiten, Ausgeben einer Warnung, die die Erkennung einer potenziellen Bedrohung angibt (316), und
bei Bestimmen, dass die aktualisierte Paketdatengröße und/oder die Anzahl von Paketen des Transportprotokolls für den/die Server, die dem Ziel-IP-Subnetz entsprechen, den zweiten vordefinierten Schwellenwert überschreiten, Ausgeben einer Warnung, die die Erkennung einer potenziellen Bedrohung angibt.

2. Verfahren (300) nach Anspruch 1, wobei die Netzwerkflussinformationen der empfangenen Paketdaten verwendet werden, um den vordefinierten ersten und den vordefinierten zweiten Schwellenwert festzulegen.

3. Verfahren (300) nach Anspruch 1 oder 2, wobei bei Bestimmen, dass die aktualisierte Paketdatengröße und/oder die Anzahl von Paketen des Transportprotokolls (312) für das Ziel-IP-Subnetz den ersten vordefinierten Schwellenwert nicht überschreiten (314), Fortfahren mit dem Auswerten des Servertransportprotokolls.

4. Verfahren (300) nach einem der Ansprüche 1 bis 3, wobei bei Bestimmen, dass die aktualisierte Paketdatengröße und/oder die Anzahl von Paketen des Transportprotokolls (312) für die Server, die dem Ziel-IP-Subnetz entsprechen, den zweiten vordefinierten Schwellenwert nicht überschreiten (322), iteratives Zurückkehren (302) zum Auswerten anschließend neu empfangener Paketdaten.

5. Verfahren (300, 400) nach einem der Ansprüche 1 bis 4, ferner umfassend Vorhalten zusätzlicher Ziel-IP-Adressen, die von einem Client angefordert werden, durch:
Bereitstellen zusätzlicher Ziel-IP-Adressen (402), die vom Client angefordert werden;
Durchführen einer Nachschlagefunktion in einer Datenbank (404), um gespeicherte, zuvor registrierte Ziel-IP-Adressen zu identifizieren, die dem anfordernden Client gehören;
Zuordnen der zusätzlichen Ziel-IP-Adressen (406) in die Datenbank basierend auf den identifizierten gespeicherten, zuvor registrierten IP-Adressen; und
Registrieren und Speichern der zusätzlichen Ziel-IP-Adressen (408), die dem anfordernden Client zugeordnet sind, in der Datenbank.

6. Verfahren (300, 400) nach Anspruch 5, wobei, nach dem Registrieren und Speichern der zusätzlichen IP-Adressen für den anfordernden Client (408), Zurückkehren (410) zur Aggregationsverarbeitung (310) des Verfahrens (300).

7. Verfahren (300, 400) nach Anspruch 1, wobei die Auswahl der zu empfangenden Paketdaten teilweise auf einem netzflussdatenverkehrbasierten statistischen Stichprobenverfahren basiert.

8. System zum Erkennen bösartiger Bedrohungen durch iteratives Aggregieren von Netzwerkflussinformationen von empfangenen Paketdaten, umfassend:
eine Netzwerkkommunikationsinfrastruktur (104), die dazu konfiguriert ist, den Transport der empfangenen Paketdaten zu erleichtern und die empfangenen Paketdaten zu einem beabsichtigten Ziel zu leiten, basierend auf den entsprechenden Netzwerkflussinformationen der empfangenen Paketdaten, wobei die Netzwerkflussinformationen Informationen enthalten, die eine Ziel-IP-Adresse, eine Start- und Endzeit, ein Transportprotokoll, eine Gesamtpaketdatengröße und eine Anzahl von Paketen der empfangenen Paketdaten identifizieren;
mindestens ein Datencenter (DC) (106, 108), das mit der Netzwerkkommunikationsinfrastruktur (104) in Kommunikation steht und mindestens eine Top-of-Rack(ToR)-Netzwerkvermittlungsvorrichtung (106A-B, 108A-B) umfasst, die dazu konfiguriert ist, eine Vielzahl von Servern (106A1-N, 106B1-B2, 108A1-N, 108B1-B2) zu verwalten, die [[einem]] einem Ziel-IP-Subnetz zugeordnet ist, das der Ziel-IP-Adresse entspricht, die durch die Netzwerkflussinformationen der empfangenen Datenpakete identifiziert wird;
eine Zeitaggregationsschicht (202), die dazu konfiguriert ist, ein Zeitintervallfenster für die empfangenen Paketdaten basierend auf der Start- und Endzeit zuzuweisen, die durch die Netzwerkflussinformationen der empfangenen Paketdaten identifiziert werden;
eine DC-Aggregationsschicht (204), die dazu konfiguriert ist, ein entsprechendes DC (106, 108) basierend auf der Ziel-IP-Adresse zu bestimmen, die durch die Netzwerkflussinformationen der empfangenen Paketdaten identifiziert wird;
eine Subnetzaggregationsschicht (206), die zu Folgendem konfiguriert ist:
Bestimmen eines Bereichs des Ziel-IP-Subnetzes und des zugehörigen Zielsubnetztransportprotokolls basierend auf den Netzwerkflussinformationen der empfangenen Paketdaten,
Auswerten des Zielsubnetztransportprotokolls und Aktualisieren die Paketdatengröße und/oder der Anzahl von Paketen basierend auf den empfangenen Paketdatennetzwerkflussinformationen, die durch die Netzwerkflussinformationen der empfangenen Paketdaten identifiziert werden, und
Bestimmen, ob die aktualisierte Paketdatengröße und/oder die Anzahl von Paketen des Zielsubnetztransportprotokolls einen ersten vordefinierten Schwellenwert überschreiten;
eine Serveraggregationsschicht (208), die zu Folgendem konfiguriert ist:
Bestimmen eines oder mehrerer Server, die dem Ziel-IP-Subnetz und dem zugehörigen Servertransportprotokoll entsprechen, basierend auf den Netzwerkflussinformationen der empfangenen Datenpakete,
Auswerten des Servertransportprotokolls und Aktualisieren der Paketdatengröße und/oder der Anzahl von Paketen basierend auf den empfangenen Paketdatennetzwerkflussinformationen der empfangenen Paketdaten, und
Bestimmen, ob die aktualisierte Paketdatengröße und/oder die Anzahl von Paketen des Zielservertransportprotokolls einen zweiten vordefinierten Schwellenwert überschreiten; wobei:
bei Bestimmen, dass die aktualisierte Paketdatengröße des Subnetztransportprotokolls und/oder die Anzahl von Paketen den ersten vordefinierten Schwellenwert überschreiten, Ausgeben einer Warnung, die eine Erkennung einer potenziellen Bedrohung angibt; und
bei Bestimmen, dass die aktualisierte Paketdatengröße des Servertransportprotokolls und/oder die Anzahl von Paketen den zweiten vordefinierten Schwellenwert überschreiten, Ausgeben einer Warnung, die die Erkennung einer potenziellen Bedrohung angibt.

9. System nach Anspruch 8, wobei die Netzwerkflussinformationen der empfangenen Paketdaten verwendet werden, um den vordefinierten ersten und den vordefinierten zweiten Schwellenwert festzulegen.

10. System nach Anspruch 8 oder 9, wobei die Aggregationsschicht (210) ferner zu Folgendem konfiguriert ist:
Bereitstellen zusätzlicher Ziel-IP-Adressen, die von einem Client angefordert werden;
Durchführen einer Nachschlagefunktion in einer Datenbank, um zuvor gespeicherte, registrierte Ziel-IP-Adressen zu identifizieren, die dem anfordernden Client gehören;
Zuordnen der zusätzlichen Ziel-IP-Adressen zum anfordernden Client basierend auf den identifizierten gespeicherten, zuvor registrierten IP-Adressen; und
Registrieren und Speichern der zusätzlichen Ziel-IP-Adressen, die dem anfordernden Client zugeordnet sind, in der Datenbank.

11. System nach Anspruch 8, wobei die Auswahl der zu empfangenden Paketdaten teilweise auf einem netzflussdatenverkehrbasierten statistischen Stichprobenverfahren basiert.

## Revendications

1. Procédé (300) pour détecter des menaces malveillantes par agrégation itérative des informations de flux réseau des données de paquets reçues, comprenant :
l'analyse (304) des informations de flux réseau des données de paquets reçues contenant des informations identifiant les heures de début et de fin, l'adresse IP de destination, le protocole de transport, la taille totale des données de paquets et le nombre de paquets des données de paquets reçues ;
l'attribution d'une fenêtre d'intervalle de temps (306), sur la base des heures de début et de fin identifiées par les informations de flux réseau des données de paquets reçues, pour l'agrégation temporelle ;
la détermination d'un centre de données (DC) correspondant (308), sur la base de l'adresse IP de destination identifiée par les informations de destination de flux réseau des données de paquets reçues, pour l'agrégation de DC ;
la détermination d'une plage d'un sous-réseau IP de destination (310), correspondant à l'adresse IP de destination identifiée par les informations de destination de flux réseau des données de paquet reçues, pour l'agrégation de sous-réseau ;
l'évaluation du protocole de transport (312) pour le sous-réseau IP de destination et la mise à jour de la taille totale des données de paquet et/ou du nombre de paquets tels qu'identifiés par les informations de destination de flux réseau des données de paquet reçues ;
la détermination que la taille des données de paquet et/ou le nombre de paquets mis à jour du protocole de transport (312) pour le sous-réseau IP de destination dépassent ou non une première valeur de seuil prédéfinie (314) ;
l'évaluation d'un protocole de transport (320) pour le ou les serveurs correspondant au sous-réseau IP de destination et la mise à jour de la taille des données de paquet et/ou du nombre de paquets tels qu'identifiés par les informations de destination de flux réseau des données de paquet reçues ; et
la détermination que la taille des données de paquet et/ou le nombre de paquets mis à jour du protocole de transport (312) pour le ou les serveurs correspondant au sous-réseau IP de destination dépassent ou non un second seuil prédéfini (322) ;
dans lequel :
lorsqu'il est déterminé que la taille des données de paquet et/ou le nombre de paquets mis à jour du protocole de transport pour le sous-réseau IP de destination dépassent la première valeur de seuil prédéfinie, une alerte est émise indiquant la détection d'une menace potentielle (316), et
lorsqu'il est déterminé que la taille des données de paquet et/ou le nombre de paquets mis à jour du protocole de transport pour les serveurs correspondant au sous-réseau IP de destination dépassent la seconde valeur de seuil prédéfinie, une alerte est émise indiquant la détection d'une menace potentielle.

2. Procédé (300) selon la revendication 1, dans lequel les informations de flux réseau des données de paquets reçues sont utilisées pour établir les première et seconde valeurs de seuil prédéfinies.

3. Procédé (300) selon la revendication 1 ou 2, dans lequel, lorsqu'il est déterminé que la taille des données de paquet et/ou le nombre de paquets mis à jour du protocole de transport (312) pour le sous-réseau IP de destination ne dépassent pas la première valeur de seuil prédéfinie (314), l'évaluation du protocole de transport de serveur se poursuit.

4. Procédé (300) selon l'une quelconque des revendications 1 à 3, dans lequel, lorsqu'il est déterminé que la taille et/ou le nombre de paquets de données mis à jour du protocole de transport (312) pour les serveurs correspondant au sous-réseau IP de destination ne dépassent pas la seconde valeur de seuil prédéfinie (322), un retour itératif (302) a lieu pour évaluer ensuite les données de paquets nouvellement reçues.

5. Procédé (300, 400) selon l'une quelconque des revendications 1 à 4, comprenant en outre la fourniture d'adresses IP de destination supplémentaires demandées par un client en :
fournissant des adresses IP de destination supplémentaires (402) demandées par le client ;
exécutant une fonction de recherche d'une base de données (404) pour identifier les adresses IP de destination stockées précédemment enregistrées appartenant au client demandeur ;
associant les adresses IP de destination supplémentaires (406) à la base de données, sur la base des adresses IP stockées précédemment enregistrées identifiées ; et
en enregistrant et en stockant dans la base de données des adresses IP de destination supplémentaires (408) associées au client demandeur.

6. Procédé (300, 400) selon la revendication 5, dans lequel, après avoir enregistré et stocké les adresses IP supplémentaires pour le client demandeur (408), un retour (410) au traitement d'agrégation (310) du procédé (300) a lieu.

7. Procédé (300, 400) selon la revendication 1, dans lequel la sélection des données de paquet à recevoir est effectuée sur la base, en partie, d'un processus d'échantillonnage statistique basé sur le trafic netflow.

8. Système pour détecter des menaces malveillantes par agrégation itérative des informations de flux réseau des données de paquets reçues, comprenant :
une infrastructure de communication réseau (104) configurée pour faciliter le transport des données de paquets reçues et pour diriger les données de paquets reçues vers une destination prévue, sur la base des informations de flux réseau correspondantes des données de paquets reçues, dans lequel les informations de flux réseau contiennent des informations identifiant une adresse IP de destination, les heures de début et de fin, le protocole de transport, la taille totale des données de paquets et le nombre de paquets des données de paquets reçues ;
au moins un centre de données (DC) (106, 108), en communication avec l'infrastructure de communication réseau (104), comprenant au moins un dispositif de commutation réseau de haut de rack (ToR) (106A-B, 108A-B) configuré pour gérer une pluralité de serveurs (106A1-N, 106B1-B2, 108A1-N, 108B1-B2) associés à un sous-réseau IP de destination correspondant à l'adresse IP de destination identifiée par les informations de flux réseau des données de paquets reçues ;
une couche d'agrégation temporelle (202) configurée pour attribuer une fenêtre d'intervalle de temps aux données de paquets reçues sur la base des heures de début et de fin identifiées par les informations de flux réseau des données de paquets reçues ;
une couche d'agrégation DC (204) configurée pour déterminer un DC correspondant (106, 108), sur la base de l'adresse IP de destination identifiée par les informations de flux réseau des données de paquets reçues ;
une couche d'agrégation de sous-réseau (206) configurée pour :
déterminer une plage du sous-réseau IP de destination et du protocole de transport de sous-réseau de destination lié sur la base des informations de flux réseau des données de paquets reçues,
évaluer le protocole de transport de sous-réseau de destination et mettre à jour la taille et/ou le nombre de paquets de données sur la base des informations de flux réseau des données de paquets reçues identifiées par les informations de flux réseau des données de paquets reçues, et
déterminer si la taille des données de paquet et/ou le nombre de paquets mis à jour du protocole de transport de sous-réseau de destination dépassent une première valeur de seuil prédéfinie ;
une couche d'agrégation de serveur (208) configurée pour :
déterminer le ou les serveurs correspondant au sous-réseau IP de destination et au protocole de transport de serveur lié sur la base des informations de flux réseau des données de paquets reçues,
évaluer le protocole de transport de serveur et mettre à jour la taille des données de paquet et/ou le nombre de paquets sur la base des informations de flux réseau des données de paquets reçues, et
déterminer si la taille des données de paquet et/ou le nombre de paquets mis à jour du protocole de transport de serveur de destination dépassent une seconde valeur de seuil prédéfinie ;
dans lequel :
lorsqu'il est déterminé que la taille des données de paquet et/ou le nombre de paquets mis à jour du protocole de sous-réseau de destination dépassent la première valeur de seuil prédéfinie, une alerte est émise indiquant une détection d'une menace potentielle ; et
lorsqu'il est déterminé que la taille des données de paquet et/ou le nombre de paquets mis à jour du protocole de serveur de destination dépassent la seconde valeur de seuil prédéfinie, une alerte est émise indiquant la détection d'une menace potentielle.

9. Système selon la revendication 8, dans lequel les informations de flux réseau des données de paquets reçues sont utilisées pour établir les première et seconde valeurs de seuil prédéfinies.

10. Système selon la revendication 8 ou 9, dans lequel la couche d'agrégation (210) est en outre configurée pour :
fournir des adresses IP de destination supplémentaires demandées par un client ;
exécuter une fonction de recherche d'une base de données pour identifier les adresses IP de destination précédemment stockées enregistrées appartenant au client demandeur ;
associer les adresses IP de destination supplémentaires au client demandeur, sur la base des adresses IP stockées précédemment enregistrées identifiées ; et
enregistrer et stocker dans la base de données les adresses IP de destination supplémentaires associées au client demandeur.

11. Système selon la revendication 8, dans lequel la sélection des données de paquet à recevoir est effectuée sur la base, en partie, d'un processus d'échantillonnage statistique basé sur le trafic netflow.
